# EUROPEAN PATENT APPLICATION

(11) **EP 4 591 978 A1**
(43) Date of publication of application: **30.07.2025**
(21) Application number: 24208548.8
(22) Date of filing: 24.10.2024
(51) Int. Cl.: B01J 20/30, B01J 41/04, C08F 212/14

(54) **SULFONATE GROUP-BASED ANION RESIN, PREPARATION METHOD THEREOF, AND ANION EXCHANGE MEMBRANE**

(30) Priority: 29.01.2024 CN 202410123403; 13.03.2024 WO PCT/CN2024/081318
(71) Applicant: EVE Hydrogen Energy Co., LTD., HuiZhou Guangdong 516000 (CN)
(72) Inventor: YOU, Yingxue, HuiZhou, Guangdong, 516000 (CN); LI, Jiaming, HuiZhou, Guangdong 516000, 516000 (CN); LI, Jian, HuiZhou, Guangdong, 516000 (CN); SU, Xiangdong, HuiZhou, Guangdong, 516000 (CN); WANG, Ying, HuiZhou, Guangdong, 516000 (CN)
(74) Representative: Murgitroyd & Company

(57) **Abstract**

Disclosed is a method of preparing a sulfonate group-based anion resin including: performing a quaternization reaction between a nitrogen-containing compound and a quaternizing agent comprising a sulfonate compound at a temperature of 25°C to 120°C for 3 to 72 hours to obtain the sulfonate group-based anion resin. The nitrogen-containing compound includes at least one of a segment I, a segment II, and a segment III; in which the segment I is 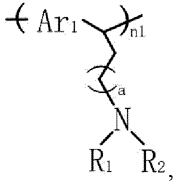 the segment II is 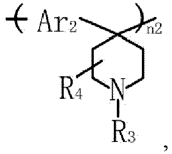 and the segment III is

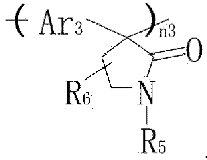

## Description

### TECHNICAL FIELD

The present disclosure relates to the field of battery technology, and in particular, to a sulfonate group-based anion resin, a preparation method thereof, and an anion exchange membrane.

### BACKGROUND

Anion exchange membranes, as an important part of an anion exchange membrane electrolyzer, serve to conduct -OH from the cathode to the anode, and block the direct transfer of gases and electrons between the electrodes. The anion exchange membrane generally includes a polymer backbone and charged ion-conducting groups. The polymer backbone and the charged ion-conducting groups can be linked by long or short side chains. In the prior art, the anion exchange resin is generally prepared by quaternization of a tertiary nitrogen-containing polymer with halohydrocarbon. Common haloalkanes include iodomethane, bromomethane, bromopropane, dibromopentane, chloromethane, benzyl chloride, and the like. Although these reagents may provide strong alkylation activity, they are of toxicity. In addition, the presence of halide ions may contaminate the water electrolysis catalyst, thereby affecting the performance of the electrolyzer.

### SUMMARY

The present disclosure provides a sulfonate group-based anion resin, a preparation method thereof, and an anion exchange membrane, which can eliminate the use of highly toxic quaternizing agent in the preparation of anion exchange resins, improve the safety during the preparation thereof, and prevent the residual of the quaternizing agent from adversely affecting the performance of the electrolyzer.

According to a first aspect, the present disclosure provides a method for preparing a sulfonate group-based anion resin, including: performing a quaternization reaction between a nitrogen-containing compound and a quaternizing agent comprising a sulfonate compound at a temperature of 25 to 120°C for 3 to 72 hours to prepare the sulfonate group-based anion resin. The nitrogen-containing compound includes at least one of a segment I, a segment II, and a segment III.

The segment I has a structure represented by 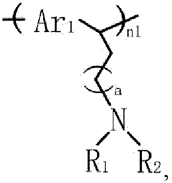 in which n1 represents a polymerization degree of the segment I, Ar₁ represents an aromatic structural unit, a represents a number of methylene groups, the a is a positive integer, R₁ and R₂ are each independently selected from H, a hydrocarbon group or a substituted hydrocarbon group, or R₁ and R₂ together with N atom to which they are connected form a polycyclic ring.

The segment II has a structure represented by 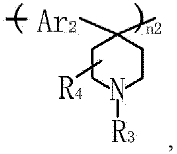 in which n2 represents a polymerization degree of the segment II, Ar₂ represents an aromatic structural unit, and R₃ and R₄ are each independently selected from H, a hydrocarbon group or a substituted hydrocarbon group.

The segment III has a structure represented by 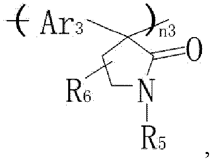 in which n3 represents a polymerization degree of the segment III, Ar₃ represents an aromatic structural unit, and R₅ and R₆ are each independently selected from H, a hydrocarbon group or a substituted hydrocarbon group.

According to a second aspect, the present disclosure provides a sulfonate group-based anion resin including at least one of a segment V, a segment VI, or a segment VII.

The segment V has a structure represented by 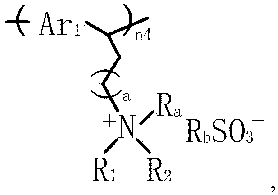 in which n4 represents a polymerization degree of the segment V, Ar₁ represents an aromatic structural unit, a represents a number of methylene groups, the a is a positive integer, R₁ and R₂ are each independently selected from H, a hydrocarbon group or a substituted hydrocarbon group, or R₁ and R₂ together with N atom to which they are connected form a polycyclic ring.

The segment VI has a structure represented by 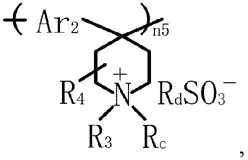 in which n5 represents a polymerization degree of the segment VI, Ar₂ represents an aromatic structural unit, and R₃ and R₄ are each independently selected from H, a hydrocarbon group or a substituted hydrocarbon group.

The segment VII has a structure represented by 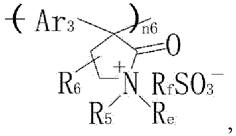 in which n6 represents a polymerization degree of the segment VII, Ar₃ represents an aromatic structural unit, and R₅ and R₆ are each independently selected from H, a hydrocarbon group or a substituted hydrocarbon group.

According to a third aspect, the present disclosure provides an anion exchange membrane prepared using the sulfonate group-based anion resin as described above.

### Advantageous Effects

According to the embodiments of the present disclosure, the method for preparing the sulfonate group-based anion resin utilizes the nitrogen-containing compound having the specific segment as a reaction raw material, thereby achieving a high quaternization efficiency (up to 95% or more) by a quaternization reaction with the sulfonate compound, and thus efficiently preparing the sulfonate-based anion exchange resin. In addition, the preparation of the anion resin by this method does not require the use of highly toxic quaternizing agents such as haloalkanes or dimethyl sulfate, thereby improving the safety of the preparation of the anion exchange resin. Moreover, the method of the present disclosure has advantageous such as cheap raw materials, easy operation, mild reaction conditions, and great economic value.

According to the embodiments of the present disclosure, the sulfonate-based anion exchange resin is free halogens, and when it is applied to an electrolyzer, no halogen is introduced into the electrolyzer, thereby enabling the electrolyzer to maintain good electrochemical performance. In addition, the sulfonate-based anion exchange resin has good film-forming property, which is beneficial for forming a smooth and transparent anion exchange membrane.

According to the embodiments of the present disclosure, the anion exchange membrane has good mechanical properties, and in the application, it does not introduce halogens into the electrolyzer, so that the electrolyzer to which the anion exchange membrane is applied maintains good electrochemical performance.

### DETAILED DESCRIPTION OF EMBODIMENTS

In some embodiments, n1, n2, and n3 are each independently selected from an integer of 10 to 1,000,000. n1 may be 10, 500, 2,000, 10,000, 500,000, 1,000,000, or the like, but is not limited to the numerical values listed, and other numerical values not listed within the range are also applicable. n2 may be 10, 500, 2,000, 10,000, 500,000, 1,000,000, or the like, but is not limited to the numerical values listed, and other numerical values not listed within the range are also applicable. n3 may be 10, 500, 2,000, 10,000, 500,000, 1,000,000, or the like, but is not limited to the numerical values listed, and other numerical values not listed within the range are also applicable.

In some embodiments, n1, n2, and n3 are each independently selected from an integer of 50 to 300. n1 may be 50, 100, 150, 300, or the like, but is not limited to the numerical values listed, and other numerical values not listed within the range are also applicable. n2 may be 50, 100, 150, 300, or the like, but is not limited to the numerical values listed, and other numerical values not listed within the range are also applicable. n3 may be 50, 100, 150, 300, or the like, but is not limited to the numerical values listed, and other numerical values not listed within the range are also applicable.

In some embodiments, the sulfonate compound has a structure represented by general formula IV:

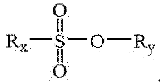

Rₓ is selected from one of methyl, ethyl, vinyl, cyclopropyl, trifluoromethyl, phenyl, tolyl, nitrophenyl, or benzyl, and R_{y} is selected from one of aromatic groups, chain alkyl groups having 1 to 10 carbon atoms, or cycloalkyl groups having 3 to 10 carbon atoms. Among the sulfonate compounds, the selection of Rₓ may pose some influence on the quaternization efficiency, and the use of the sulfonate compound having a specific Rₓ group as described above achieves a higher quaternization efficiency in the quaternization reaction. In addition, among the above sulfonate compounds, the selection of R_{y} may pose some influence on water absorption of the prepared anion exchange membrane, and the use of the+ sulfonate compound having a specific R_{y} group as described above enables the prepared anion exchange membrane to have good water absorption.

In some embodiments, in general formula IV, R_{y} is selected from phenyl, o-tolyl, naphthyl, methyl, ethyl, propyl, butyl, pentyl, hexyl, cyclopropyl, cyclobutyl, cyclopentyl, or cyclohexyl.

In some embodiments, the sulfonate compound includes at least one of methyl methanesulfonate, ethyl methanesulfonate, propyl methanesulfonate, butyl methanesulfonate, propyl ethanesulfonate, ethyl ethanesulfonate, but-3-yn-1-yl methanesulfonate, allyl allylsulfonate, methyl benzenesulfonate, methyl p-toluenesulfonate, methyl nitrobenzenesulfonate, methyl trifluoromethanesulfonate, ethyl trifluoromethanesulfonate, ethyl toluenesulfonate, cyclobutyl 4-methylbenzenesulfonate, butyl toluenesulfonate, neopentyl benzenesulfonate, tetrahydro-2H-pyran-4-yl methanesulfonate, or cyclohexyl p-toluenesulfonate.

In some embodiments, the quaternization reaction is carried out at a reaction temperature of 70 to 120°C for 8 to 36 hours. The reaction temperature of the quaternization reaction may be 70°C, 80°C, 90°C, 100°C, 110°C, 120°C, and other values, which is not limited to the listed values, and other numerical values not listed within the range of the reaction temperature are also applicable. The reaction time of the quaternization reaction may be 8 hours, 16 hours, 24 hours, 32 hours, or 36 hours, but not limited to the numerical values listed, and other numerical values not listed within the reaction time range are also applicable.

In some embodiments, a method for preparing a sulfonate group-based anion resin comprises the steps of: S1: mixing a nitrogen-containing compound, the sulfonate compound, and an organic solvent to generate a reaction solution, and then performing a quaternization reaction between the nitrogen-containing compound and the sulfonate compound to obtain a product solution; S2: mixing the product solution with a precipitating agent to obtain a precipitate, and separating, collecting, washing, and drying the precipitate to yield the sulfonate group-based anion resin as a solid.

In some embodiments, the organic solvent includes at least one of chloroform, N,N-dimethylacetamide, N,N-dimethylformamide, N-methyl-2-pyrrolidone, or dimethyl sulfoxide.

In some embodiments, the precipitating agent includes at least one of ethanol, ethyl acetate, ethylene glycol, diethyl ether, tetrahydrofuran, acetone, or water.

In some embodiments, n4, n5, and n6 are each independently selected from an integer of 10 to 1,000,000.

In some embodiments, n4, n5, and n6 are each independently selected from an integer of 10 to 300.

In some embodiments, Rₐ, Rₑ, and Rₑ are each independently selected from one of aromatic groups, chain alkyl groups having 1 to 10 carbon atoms, or cycloalkyl groups having 3 to 10 carbon atoms, and R_{b}, R_{d}, and R_{f} are each independently selected from one of methyl, ethyl, vinyl, cyclopropyl, trifluoromethyl, phenyl, tolyl, nitrophenyl, or benzyl.

In some embodiments, Rₐ, Rₑ, and Rₑ are each independently selected from phenyl, o-tolyl, naphthyl, methyl, ethyl, propyl, butyl, pentyl, hexyl, cyclopropyl, cyclobutyl, cyclopentyl, or cyclohexyl.

In some embodiments, Ar₁, Ar₂, and Ar₃ are each independently selected from:

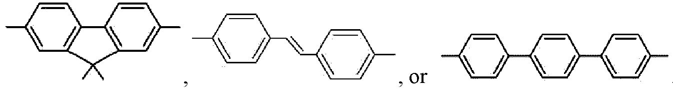

When the aromatic structural unit as described above is selected to construct the main chain of the sulfonate group-based anion resin, the resulting sulfonate group-based anion resin has excellent alkali resistance stability.

In some embodiments, in segment V, Ar₁ is

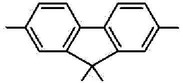

In some embodiments, the segment V has a structure as represented by the following formulae:

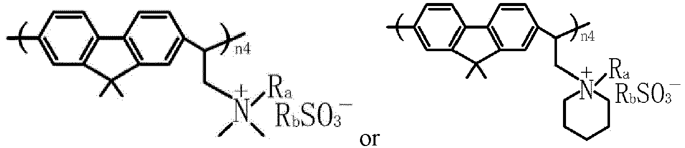

In some embodiments, in segment VI, Ar₂ is

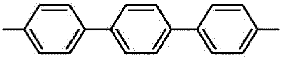

In some embodiments, the segment VI has a structure as represented by the following formula:

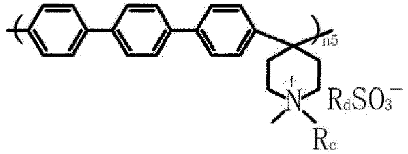

In some embodiments, in segment VII, Ar₃ is

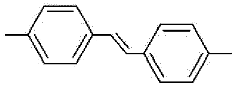

In some embodiments, the segment VII has a structure as represented by the following formula:

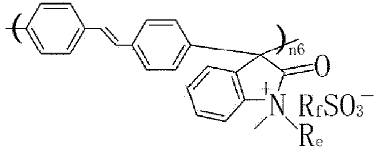

In some embodiments, the above preparation method includes the following operations: S1: dissolving the sulfonate group-based anion resin to prepare an anion exchange resin solution, wherein the sulfonate group-based anion resin accounts for 5 to 40 wt% of the anion exchange resin solution; S2: coating the anion exchange resin solution to form an anion exchange membrane.

In some embodiments, in S2, the coating is carried out at a temperature of 40 to 120°C, for example, at 40°C, 70°C, 80°C, 100°C, or 120°C, but the temperature is not limited to the numerical values listed, and other numerical values not listed within the temperature range are also applicable.

In some embodiments, the anion exchange membrane comprises a sulfonate group in a content greater than 50 ppm, for example, 55 ppm, 70 ppm, 90 ppm, 120 ppm, or 180 ppm, but the content is not limited to the numerical values listed, and other numerical values not listed within the content range are also applicable.

In the following Examples and Comparative Examples, the "quaternization efficiency" was tested and calculated as follows:

### a. Determination of ion exchange capacity (IEC)

An anion exchange membrane was prepared from an anion resin generated by a quaternization reaction, and then cut into a membrane sample of 50 × 50 mm size, immersed in 1 mol/L potassium hydroxide solution at 80°C and left for 24 hours to exchange anions in the membrane sample for hydroxide group, so as to obtain a hydroxide-type membrane sample. The hydroxide-type membrane sample was immersed in 1 mol/L NaCl solution at 60°C and left to stand for 48 hours to exchange ions, so that hydroxide group in the hydroxide-type membrane sample was exchanged into chloride ions, so as to obtain a chloride-type membrane sample. The chloride-type membrane sample was washed well with deionized water to ensure that NaCl adsorbed on the chloride-type membrane sample was fully cleaned. Moisture on the surface of the chlorine-type membrane sample was absorbed with filter paper to dry. Then, the chlorine-type membrane sample was immersed in 50 mL of 0.1 mol/L NaNO₃ solution at 60°C for 48 hours, so that the chloride ions in the membrane sample were completely exchanged into the NaNO₃ solution. The amount of chloride ions exchanged in the NaNO₃ solution is equal to the amount of anions to be measured in the anion exchange membrane prepared using the anion resin that is generated by the quaternization reaction. Measurement of the content of chloride ions in the membrane by titration was carried out as follows: to a conical flask adding 10 mL of NaNO₃ solution in which the chlorine-type membrane sample was fully immersed, adding two drops of K₂CrO₄ as an indicator, titrating the NaNO₃ solution with 0.01 mol/L calibrated AgNO₃ to form a brick-red precipitate, and recording the volume of the consumed AgNO₃ solution, denoted as V_{AgNO3}. Three parallel titrations were carried out, taking an average value to calculate the content of chloride ions in the chloride-type membrane sample. The membrane sample was taken out, washed fully with deionized water, and dried well in an oven. Then, the membrane sample was taken out from the oven quickly to weight the mass of the dry membrane, denoted as m_{dry}. The ion exchange capacity of the membrane sample can be calculated from the equation: IEC=5×C_{AgNO3}×V_{AgNO3}/m_{dry}, where IEC is the ion exchange capacity of the membrane sample, in mol/g; C_{AgNO3} is the concentration of the calibrated AgNO₃ solution, in mol/L, as the average of results in three titration; V_{AgNO3} is the volume of AgNO₃ solution consumed by titration, in L, as the average of amounts used in three titration; m_{dry} is the mass of the dry membrane sample after titration, in g.

### b. Equation for grafting ratio

The grafting ratio is a ratio of the found grafting efficiency to the calculated grafting efficiency, that is, the grafting ratio = (IEC_{found}/IEC_{calculated}) * 100%.

### Example 1

In the present embodiment, four treatment groups, labeled as Group 1, Group 2, Group 3 and Group 4, were provided, and different monomers as a raw material were selected in Groups 1 to 4 to prepare nitrogen-containing compounds.

Among them, the nitrogen-containing compound having the segment I was prepared in Groups 1 and 2:

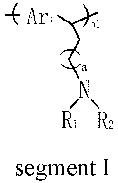

The nitrogen-containing compound having the segment II was prepared in Groups 3:

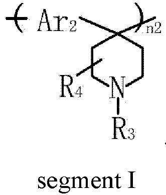

The nitrogen-containing compound having the segment III was prepared in Group 4:

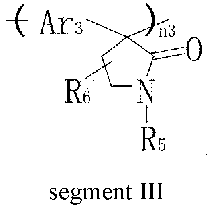

### (1) Group 1

S1. 0.15 mol of 9,9-dimethylfluorene 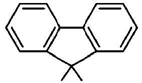 was weighed as an aromatic monomer raw material, and 0.18 mol of (dimethylamino)acetaldehyde diethyl acetal 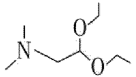 was weighed as a branching monomer raw material.

S2. The weighted 9,9-dimethylfluorene and (dimethylamino)acetaldehyde diethyl acetal were added into 50 mL of dichloromethane, and dispersed well to obtain a reaction base solution.

S3. The temperature of the reaction base solution was lowered to 0°C. Then, 120 mL of trifluoromethanesulfonic acid was added to the reaction base solution, and stirred well, and then the temperature of the reaction base solution was raised to 13°C. Under this temperature condition, the reaction base solution was subjected to polymerization for 36 hours. The resulting reaction solution was discharged into water, immersed for 12 hours, filtered, and dried, to yield a nitrogen-containing compound with a chemical formula as follows, wherein the polymerization degree n1 is 65:

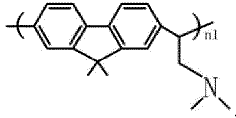

### (2) Group 2:

S1. 0.16 mol of 9,9-dimethylfluorene 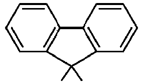 was weighed as an aromatic monomer raw material, and 0.18 mol of 1-piperidineacetaldehyde diethyl acetal 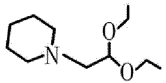 was weighed as a branching monomer raw material.

S2. The weighted 9,9-dimethylfluorene and 1-piperidineacetaldehyde diethyl acetal were added into 50 mL of dichloromethane, and dispersed well to obtain a reaction base solution.

S3. The temperature of the reaction base solution was lowered to 0°C. Then, 120 mL of trifluoromethanesulfonic acid was added to the reaction base solution, and stirred well, and then the temperature of the reaction base solution was raised to 13°C. Under this temperature condition, the reaction base solution was subjected to polymerization for 24 hours. The resulting reaction solution was discharged into water, immersed for 12 hours, filtered, and dried, to yield a nitrogen-containing compound with a chemical formula as follows, wherein the polymerization degree n1 is 80:

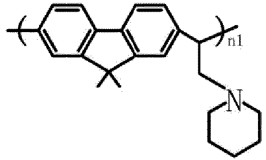

### (3) Group 3:

S1. 0.005 mol of p-terpheny 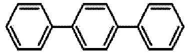 was weighed as an aromatic monomer raw material, and 0.005 mol of 1-methyl-4-piperidone 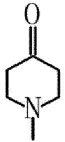 was weighed as a branching monomer raw material.

S2. The weighed p-terphenyl and 1-methyl-4-piperidone were added into 20 mL of dichloromethane and dispersed well to obtain a reaction base solution.

S3. The temperature of the reaction base solution was lowered to 0°C. Then, 3.6 mL of trifluoroacetic acid was added to the reaction base solution, and stirred for 30 min, then 45 mL of trifluoromethanesulfonic acid was added, and the temperature of the reaction base solution was raised to 13°C. Under this temperature condition, the reaction base solution was subjected to polymerization for 13 hours. The resulting reaction solution was discharged into water, immersed for 12 hours, filtered, and dried, to yield a nitrogen-containing compound with a chemical formula as follows, wherein the polymerization degree n2 is 92:

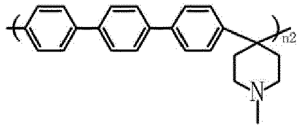

### (4) Group 4:

S1. 0.005 mol of diphenylethylene 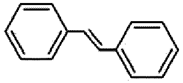 was weighed as an aromatic monomer raw material, and 0.006 mol of indole-2,3-dione 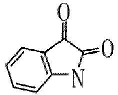 was weighed as a branching monomer raw material.

S2. The weighted diphenylethylene and indole-2,3-dione were added into 15 mL of dichloromethane, and dispersed well to obtain a reaction base solution.

S3. The temperature of the reaction base solution was lowered to 0°C. Then, 3.6 mL of trifluoroacetic acid was added to the reaction base solution, and stirred for 30 min, then 50 mL of trifluoromethanesulfonic acid was added, and the temperature of the reaction base solution was raised to 13°C. Under this temperature condition, the reaction base solution was subjected to polymerization for 8 hours. The resulting reaction solution was discharged into water, immersed for 12 hours, filtered, and dried, to yield a nitrogen-containing compound with a chemical formula as follows, wherein the polymerization degree n3 is 145:

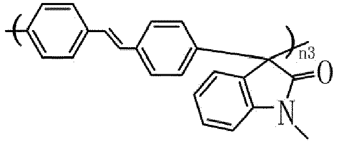

### Example 2

The nitrogen-containing compounds obtained in Example 1 were used as raw materials to prepare a sulfonate group-based anion resin, and the nitrogen-containing compounds were subjected to a quaternization reaction by using a sulfonate compound as a quaternizing agent to prepare the sulfonate group-based anion resin. The sulfonate compound has a general formula IV, specific selections of which were shown in Tables 1 to 4:

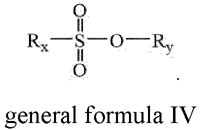

In other embodiments, other sulfonate compounds in compliance with the general formula IV may be selected as the quaternizing agent as needed, in which Rₓ is selected from one of methyl, ethyl, vinyl, cyclopropyl, trifluoromethyl, phenyl, tolyl, nitrophenyl, and benzyl, and R_{y} is selected from one of aromatic groups, chain alkyl groups having 1 to 10 carbon atoms, and cycloalkyl groups having 3 to 10 carbon atoms.

Different treatment groups, labeled as Group 1, Group 2, Group 3, and Group 4, were provided dependent to the different nitrogen-containing compounds used to prepare the sulfonate group-based anion resin. Specific operation of preparing the sulfonate group-based anion resin in these treatment groups is as follows:
Step 1. The nitrogen-containing compound and the sulfonate compound were dissolved in N-methylpyrrolidone to obtain a reaction solution, followed by conducting a quaternization reaction in the reaction solution at 25 to 120°C for 3 to 72 hours, to obtain a product solution containing the sulfonate group-based anion resin.
Step 2. To the product solution a precipitating agent was added, and in this example, deionized water was used as the precipitating agent. The resulting mixed solution system was left standing so that a precipitate was precipitated well. Then, the precipitate was filtered, washed, and dried to obtain the sulfonate group-based anion resin as a solid (i.e., a product prepared by the above quaternization reaction).

### (1) Group 1

The compound 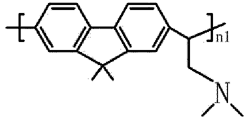 prepared in Example 1 was used as the nitrogen-containing compound for preparing the sulfonate-based anion exchange resin. Different sulfonate compounds were selected as the quaternizing agent. Different groups, labeled as Group 1-1, Group 1-2, and Group 1-3, were provided dependent on the selected different sulfonate compounds.

Table 1 shows the optimal reaction conditions for the quaternization reaction of the compound 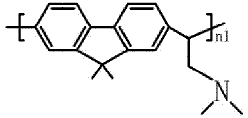 in combination with different sulfonate compound. Where the specific one among the sulfonate compounds paired with the nitrogen-containing compound was determined, the quaternization reaction under the conditions shown in Table 1 achieves the highest quaternization efficiency. The sulfonate group-based anion resin prepared in Group 1 of Example 2 has a structure represented by the following general formula:

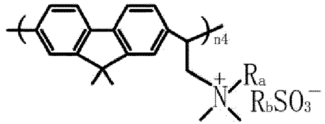

**Table 1. Optimal conditions for quaternization in pairs of materials in Groups 1-1 to 1-3 in Group 1 of Example 2**

| Groups | Nitrogen-containing compounds | Sulfonate compounds (quaternizing agent) | Ratio of the nitrogen-containing compound to the sulfonate compound (molar ratio) | Conditions for quaternization reaction (reaction temperature/reaction time) | Quaternization efficiency |
|---|---|---|---|---|---|
| Group 1-1 | 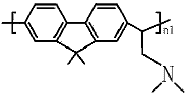 | Ethyl methanesulfonate | 1:1.5 | 110°C/12 h | 94% |
| Group 1-2 | | Cyclohexyl toluenesulfonate | 1:2 | 120°C/36 h | 90% |
| Group 1-3 | | Methyl nitrobenzenesulfonate | 1:1 | 80°C/8 h | 98% |

### (2) Group 2

The compound 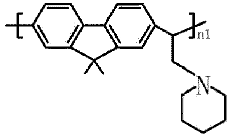 prepared in Example 1 was used as the nitrogen-containing compound for preparing the sulfonate-based anion exchange resin. Different sulfonate compounds were selected as the quaternizing agent. Different groups, labeled as Group 2-1, Group 2-2, and Group 2-3, were provided dependent on the selected different sulfonate compounds.

Table 2 shows the optimal reaction conditions for the quaternization reaction of the compound 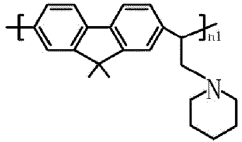 in combination with different sulfonate compound. Where the specific one among the sulfonate compounds paired with the nitrogen-containing compound was determined, the quaternization reaction under the conditions shown in Table 2 achieves the highest quaternization efficiency. The sulfonate group-based anion resin prepared in Group 2 of Example 2 has a structure represented by the following general formula:

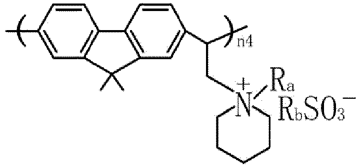

**Table 2. Optimal conditions for quaternization of pairs of materials in Groups 2-1 to 2-3 in Group 2 of Example 2**

| Groups | Nitrogen-containing compounds | Sulfonate compounds (quaternizing agent) | Ratio of the nitrogen-containing compound to the sulfonate compound (molar ratio) | Conditions for quaternization reaction (reaction temperature/reaction time) | Quaternization efficiency |
|---|---|---|---|---|---|
| Group 2-1 | 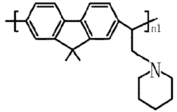 | Allyl allylsulfonate | 1:1.5 | 120°C/36 h | 94% |
| Group 2-2 | | Butyl toluenesulfonate | 1:1 | 90°C/12 h | 96% |
| Group 2-3 | | Neopentyl benzenesulfonate | 1:3 | 120°C/72 h | 88% |

### (3) Group 3

The compound 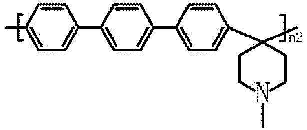 prepared in Example 1 was used as the nitrogen-containing compound for preparing the sulfonate-based anion exchange resin. Different sulfonate compounds were selected as the quaternizing agent. Different groups, labeled as Group 3-1, Group 3-2, and Group 3-3, were provided dependent on the selected different sulfonate compounds.

Table 3 shows the optimal reaction conditions for the quaternization reaction of the compound 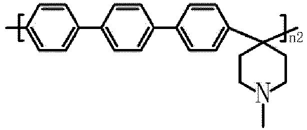 in combination with different sulfonate compound. Where the specific one among the sulfonate compounds paired with the nitrogen-containing compound was determined, the quaternization reaction under the conditions shown in Table 3 achieves the highest quaternization efficiency. The sulfonate group-based anion resin prepared in Group 3 of Example 2 has a structure represented by the following general formula:

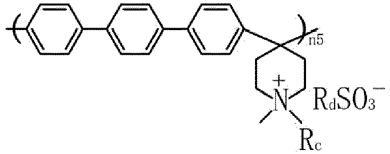

**Table 3. Optimal conditions for quaternization in pairs of materials Groups 3-1 to 3-3 in Group 3 of Example 2**

| Groups | Nitrogen-containing compounds | Sulfonate compounds (quaternizing agent) | Ratio of the nitrogen-containing compound to the sulfonate compound (molar ratio) | Conditions for quaternization reaction (reaction temperature/rea ction time) | Quaternization efficiency |
|---|---|---|---|---|---|
| Group 3-1 | 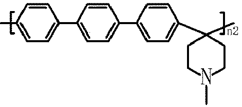 | Methyl p-toluenesulfonate | 1:1.5 | 100°C/16 h | 92% |
| Group 3-2 | | Methyl nitrobenzenesulfonate | 1:1 | 120°C/12 h | 98% |
| Group 3-3 | | Methyl trifluoromethanesulfonate | 1:3 | 80°C/24 h | 90% |

### (4) Group 4

The compound 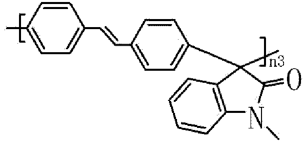 prepared in Example 1 was used as the nitrogen-containing compound for preparing the sulfonate-based anion exchange resin. Different sulfonate compounds were selected as the quaternizing agent. Different groups, labeled as Group 4-1, Group 4-2, and Group 4-3, were provided dependent on the selected different sulfonate compounds.

Table 4 shows the optimal reaction conditions for the quaternization reaction of the compound 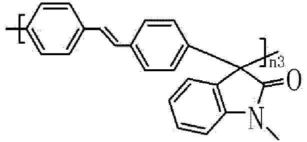 in combination with different sulfonate compound. Where the specific one among the sulfonate compounds paired with the nitrogen-containing compound was determined, the quaternization reaction under the conditions shown in Table 4 achieves the highest quaternization efficiency. The sulfonate group-based anion resin prepared in Group 4 of Example 2 has a structure represented by the following general formula:

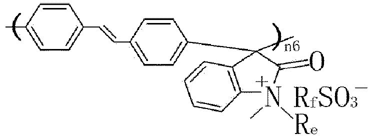

**Table 4. Optimal conditions for quaternization in pairs of materials in Groups 4-1 to 4-3 in Group 4 of Example 2**

| Groups | Nitrogen-containing compounds | Sulfonate compounds (quaternizing agent) | Ratio of the nitrogen-containing compound to the sulfonate compound (molar ratio) | Conditions for quaternization reaction (reaction temperature/re action time) | Quaternization efficiency |
|---|---|---|---|---|---|
| Group 4-1 | 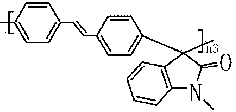 | Propyl ethanesulfonate | 1:2.5 | 110°C/18 h | 90% |
| Group 4-2 | | Cyclobutyl 4-methylbenzenesulfonate | 1:2 | 120°C/12 h | 95% |
| Group 4-3 | | Tetrahydro-2H-pyran-4-yl methanesulfonate | 1:3 | 120°C/36 h | 88% |

### Comparative Example 1

### 1. Preparation of nitrogen-containing compounds

S1. 0.005 mol of p-terphenyl was weighted as an aromatic monomer raw material, and 0.006 mol of 3-quinuclidinone hydrochloride as a branching monomer raw material.

S2. The weighted p-terphenyl and 3-quinuclidinone hydrochloride were added into 20 mL of dichloromethane, and dispersed well to obtain a reaction base solution.

S3. The temperature of the reaction base solution was lowered to 0°C. Then, 50 mL of trifluoromethanesulfonic acid was added to the reaction base solution, and the temperature of the reaction base solution was raised to 60°C. Under this temperature condition, the reaction base solution was subjected to polymerization for 16 hours. The resulting reaction solution was discharged into water, immersed for 12 hours, filtered, and dried, to yield a nitrogen-containing compound with a chemical formula as follows, wherein the polymerization degree n3 is 75 :

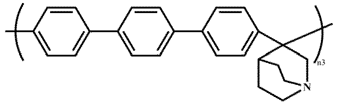

### 2. Quaternization reaction

The nitrogen-containing compounds obtained in Comparative Example 1 were used as raw materials to prepare a sulfonate group-based anion resin, and the nitrogen-containing compounds were subjected to a quaternization reaction by using a sulfonate compound as a quaternizing agent to prepare the sulfonate group-based anion resin. The present comparative example utilizes the above nitrogen-containing compounds in combination with respective different sulfonate compounds, as raw materials, to prepare the sulfonate group-based anion resin with reference to the specific operation for preparing the sulfonate group-based anion resin as described in Example 2. Different groups, labeled as Comparative Group 1-1, Comparative Group 1-2, Comparative Group 1-3, and Comparative Group 1-4, were provided dependent to the selected different sulfonate compounds.

Table 5 shows the optimum reaction conditions for different combinations of the reactant materials in the present comparative example. Where the specific one among the sulfonate compounds paired with the nitrogen-containing compound was determined, the quaternization reaction under the conditions shown in Table 5 achieves the highest quaternization efficiency.

**Table 5. Optimal conditions for quaternization in pairs of materials in Comparative Groups 1-1 to 1-4 in Comparative Example 1**

| Groups | Nitrogen-containing compounds | Sulfonate compounds (quaternizing agent) | Ratio of the nitrogen-containing compound to the sulfonate compound (molar ratio) | Conditions for quaternization reaction (reaction temperature/reaction time) | Quaternization efficiency |
|---|---|---|---|---|---|
| Comparative Group 1-1 | 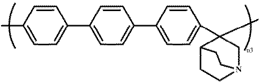 | Ethyl methanesulfonate | 1:2 | 120°C/36 h | 86% |
| Comparative Group 1-2 | | allyl allylsulfonate | 1:1.5 | 110°C/24 h | 83% |
| Comparative Group 1-3 | | Methyl p-toluenesulfonate | 1:1.5 | 110°C/12 h | 82% |
| Comparative Group 1-4 | | Propyl ethanesulfonate | 1:2.5 | 120°C/18 h | 78% |

It can be seen that, the quaternizing agent used in Comparative Group 1-1 is the same as that used in Group 1-1 of Example 2; the quaternizing agent used in Comparative Group 1-2 is the same as that used in Group 2-1 of Example 2; the quaternizing agent used in Comparative Group 1-3 is the same as that used in Group 3-1 of Example 2; and the quaternizing agent used in Comparative Group 4-1 is the same as that used in Group 4-1 of Example 2. In view of the above, the inventors find that when the nitrogen-containing compound is subjected to the quaternization reaction under the action of the sulfonate compound, the different type of the nitrogen-containing compound may have an important influence on the quaternization efficiency when combining with the same sulfonate compound. Compared with the nitrogen-containing polymer used in Comparative Example 1, the nitrogen-containing compounds prepared in Example 1 have a smaller steric hindrance, so that the quaternization efficiency of the interaction of the nitrogen-containing compounds prepared in Example 1 with the sulfonate compound is higher.

### Comparative Example 2

Iodomethane was selected as the quaternizing agent in this comparative example. The nitrogen-containing compounds prepared in Example 1 were subjected to quaternization reaction with iodomethane to prepare a halogen-type anion resin. Different groups, labeled as Comparative Group 2-1, Comparative Group 2-2, Comparative Group 2-3, and Comparative Group 2-4, were provided dependent on the different nitrogen-containing compounds. The specific components in groups are shown in Table 6.

**Table 6. Combinations of reactants in Comparative Groups 2-1 to 2-4 of Comparative Example 2**

| Groups | Nitrogen-containing compounds | Quaternizing agent |
|---|---|---|
| Comparative Group 2-1 | 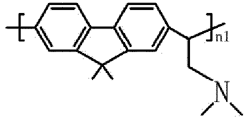 | Iodomethane |
| Comparative Group 2-2 | 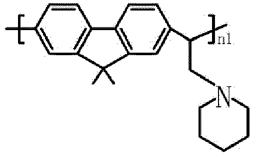 | |
| Comparative Group 2-3 | 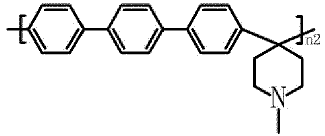 | |
| Comparative Group 2-4 | 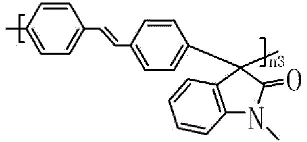 | |

The specific operations for preparing the halogen-type anion resin in Comparative Groups 2-1 to 2-4 were as follows:
S1. The nitrogen-containing compound was dissolved in DMSO solution in a mass: volume ratio of 1 g: 5 mL, and 3 eq. of iodomethane was added at room temperature.
S2. The mixed solution obtained from S1 was reacted at 80°C for 24 hours, and the reaction solution was poured into ethyl acetate to give a solid, filtered and washed with ethanol. Then, the resulting resin was subjected to alkali exchange and chlorine exchange with 3L of 1M KOH aqueous solution and 3L of 1M NaCl at 80°C, and then filtered and washed with water to obtain a halogen-type anion exchange resin.

### Example 3

Anion exchange membranes were prepared using the sulfonate group-based anion resins prepared in Example 2 according to the following steps:
S1. The sulfonate-based anion exchange resin was dissolved in dimethyl sulfoxide at 80°C to obtain an anion exchange resin solution with 20 wt% of the sulfonate-based anion exchange resin.
S2. The anion exchange resin solution obtained in S1 was poured on an automatic film applicator, in which the height of the squeegee was adjusted according to actual requirements. Films with different thicknesses were produced at 60°C, and dried at high temperature to obtain the anion exchange membranes.

### Comparative Example 3

Anion exchange membranes were prepared using the anion resins prepared in Comparative Example 2 according to the following steps:
S1. The anion exchange resin was dissolved in dimethyl sulfoxide at 80°C to obtain an anion exchange resin solution with 20 wt% of the anion exchange resin.
S2. The anion exchange resin solution prepared in S1 was poured on an automatic film applicator, in which the height of the squeegee was adjusted according to actual requirements. Films with different thicknesses were produced at 60°C, and dried at high temperature to obtain the anion exchange membranes.

### Test Example 1

### 1. Test samples

The anion exchange membranes obtained in Example 3 and Comparative Example 3 were taken as test samples. In Test Example 1, anion exchange membranes with the same content of the anion exchange resin were tested, so as to eliminate influence on the performance of the anion exchange membranes due to different contents of the anion exchange resin.

### 2. Test Items

### (1) Proton nuclear magnetic resonance (1H NMR) characterization

Nuclear magnetic characterization was performed using a superconducting nuclear magnetic resonance AV III 500 HD analyzer (Swiss), with tetramethylsilane as an internal standard and deuterated DMSO as a solvent, to characterize structures of the polymers.

### (2) Tensile strength and elongation at break of anion exchange membrane

The elongation at break and tensile strength of the anion exchange membrane were measured using a universal test machine AG-I 1 KN (Shimadzu). The anion exchange membrane was cut along the length (X-direction) and width (Y-direction) thereof into a dumbbell shape with smooth and unnotched edges, which may be observed using a low magnification microscope, and the samples with defective edges were discarded. The lengths, widths and thicknesses of the membrane samples were measured separately before testing at a stretching rate of 10 mm/min, and the result for each membrane was the average of at least three samples.

### (3) Ion residue test

a. Determination of Iodide ion content in anion exchange resin using oxygen bomb IC: a conductivity detector was used for detecting, with an ion chromatography analytical column Ion Pac AS11 (4 mm×250 mm), a guard column Ion Pac AG11 (4 mm×50 mm), using 30 mmol/L potassium hydroxide solution as eluent, at a flow rate of 1 mL/min and at 30°C.
b. Determination of sulfonate group content using an ultraviolet-visible spectrophotometer (taking p-toluenesulfonate as an example): the standard curve was configured. Aqueous methyl p-toluenesulfonate solutions with concentrations of 2 mmol/L, 1 mmol/L, and 0.4 mmol/L were scanned separately using UV-visible spectrophotometer to determine the maximum absorption wavelength at 261 nm. At this wavelength, the concentration was set to be in a range of 0.5 to 4 mmol/L, and the absorbance was controlled in a range of 0.2 to 0.8, so as to provide the standard curve with a correlation coefficient of 0.9999 (>0.99), indicating that the standard curve is valid and ready for normal testing. Sample solutions to be tested were prepared for testing.

### (4) Water electrolysis cell performance Test (tank voltage for single cell tank)

Cell performance testing was performed using a multi-channel Ivium electrochemical workstation, with a current of 0 to 1 A/cm², 10 current steps, each step for 10 s, recording a voltage value per second, and taking an average voltage on each current step.

### 3. Test Results

From the test results of this test example, it can be seen that the tank voltage of the anion exchange membranes prepared in Example 3 was lower than that of the anion exchange membranes prepared in Comparative Example 3, indicating that under the water electrolysis condition, when the anion exchange membrane made from the sulfonate group-based anion resin is applied to the electrolysis cell, the tank voltage during water electrolysis is lower, and the energy consumption is lower, compared with the anion exchange membrane made from the halogen-type anion resin. The anion exchange membrane made from the halogen-type anion resin has more residual halogen ions even after alkali exchange and chlorine exchange, and the residual halogen ions may contaminate the electrode catalyst and affect the electrocatalytic efficiency of the electrode catalyst, which is reflected in a higher tank voltage at the same current density.

**Table 7. Test result statistics**

| Source of anion exchange resin | Tensile strength of anion exchange membrane (MPa) | Elongation at break of anion exchange membrane (%) | Ion content in anion exchange membrane (ppm) | | Tank voltage of single cell electrolyzer (V@0.5A cm⁻² ) |
|---|---|---|---|---|---|
| | | | Iodide ions | Sulfonate ion | |
| Example 2 Group 1-1 | 38 | 6.7 | | 2156 | 1.85 |
| Example 2 Group 1-2 | 35 | 8.3 | | 3321 | 1.92 |
| Example 2 Group 1-3 | 32 | 7.3 | | 1654 | 1.78 |
| Example 2 Group 2-1 | 36 | 7.6 | | 2547 | 1.84 |
| Example 2 Group 2-2 | 40 | 9.2 | | 1847 | 1.86 |
| Example 2 Group 2-3 | 38 | 6.8 | | 5975 | 1.96 |
| Example 2 Group 3-1 | 48 | 9.5 | N.D.(< 20) | 3621 | 1.89 |
| Example 2 Group 3-2 | 45 | 6.8 | | 1742 | 1.76 |
| Example 2 Group 3-3 | 43 | 10.8 | | 5589 | 1.94 |
| Example 2 Group 4-1 | 42 | 15.4 | | 4125 | 1.92 |
| Example 2 Group 4-2 | 38 | 13.8 | | 3641 | 1.88 |
| Example 2 Group 4-3 | 35 | 11.2 | | 5716 | 1.96 |
| Comparative Example 2 Comparative Group 2-1 | 28 | 5.2 | 45215 | N.D.(< 20) | 2.15 |
| Comparative Example 2 Comparative Group 2-2 | 25 | 6.3 | 54821 | | 2.10 |
| Comparative Example 2 Comparative Group 2-3 | 33 | 11.5 | 57331 | | 2.03 |
| Comparative Example 2 Comparative Group 2-4 | 30 | 14.2 | 46389 | | 2.08 |

## Claims

1. A method of preparing a sulfonate group-based anion resin, comprising:
performing a quaternization reaction between a nitrogen-containing compound and a quaternizing agent comprising a sulfonate compound at a temperature of 25 to 120°C for 3 to 72 hours to obtain the sulfonate group-based anion resin,
wherein the nitrogen-containing compound comprises at least one of a segment I, a segment II, or a segment III;
the segment I has a structure represented by 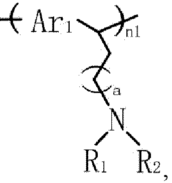
wherein n1 represents a polymerization degree of the segment I; Ar₁ represents an aromatic structural unit; a represents a number of methylene groups and the a is a positive integer; R₁ and R₂ are each independently selected from H, a hydrocarbon group or a substituted hydrocarbon group, or R₁ and R₂ together with a N atom to which they are connected form a polycyclic ring;
the segment II has a structure represented by 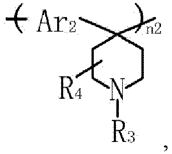
wherein n2 represents a polymerization degree of the segment II; Ar₂ represents an aromatic structural unit; and R₃ and R₄ are each independently selected from H, a hydrocarbon group or a substituted hydrocarbon group; and
the segment III has a structure represented by 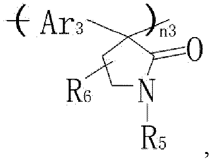
wherein n3 represents a polymerization degree of the segment III, Ar₃ represents an aromatic structural unit, and R₅ and R₆ are each independently selected from H, a hydrocarbon group or a substituted hydrocarbon group.

2. The method of claim 1, wherein the sulfonate compound has a structure represented by general formula IV: 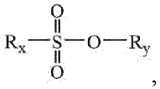 wherein Rₓ is selected from one of methyl, ethyl, vinyl, cyclopropyl, trifluoromethyl, phenyl, tolyl, nitrophenyl, or benzyl; and R_{y} is selected from one of an aromatic group, a chain alkyl group having 1 to 10 carbon atoms, or a cycloalkyl group having 3 to 10 carbon atoms.

3. The method of claim 2, wherein in the general formula IV, R_{y} is selected from phenyl, o-tolyl, naphthyl, methyl, ethyl, propyl, butyl, pentyl, hexyl, cyclopropyl, cyclobutyl, cyclopentyl or cyclohexyl.

4. The method of claim 3, wherein the sulfonate compound comprises at least one of methyl methanesulfonate, ethyl methanesulfonate, propyl methanesulfonate, butyl methanesulfonate, propyl ethanesulfonate, ethyl ethanesulfonate, but-3-yn-1-yl methanesulfonate, allyl allylsulfonate, methyl benzenesulfonate, methyl p-toluenesulfonate, methyl nitrobenzenesulfonate, methyl trifluoromethanesulfonate, ethyl trifluoromethanesulfonate, ethyl toluenesulfonate, cyclobutyl 4-methylbenzenesulfonate, butyl toluenesulfonate, neopentyl benzenesulfonate, tetrahydro-2H-pyran-4-yl methanesulfonate, or cyclohexyl p-toluenesulfonate.

5. The method of claim 1, wherein the quaternization reaction is performed at a temperature of 70 to 120°C for 8 to 36 hours.

6. The method of any one of claims 1 to 5, wherein the method comprises:
step 1. mixing the nitrogen-containing compound, the sulfonate compound, and an organic solvent to obtain a reaction solution, followed by conducting the quaternization reaction between the nitrogen-containing compound and the sulfonate compound in the reaction solution, to obtain a product solution; and
step 2. mixing the product solution with a precipitating agent to obtain a precipitate, and separating, collecting, washing, and drying the precipitate to yield the sulfonate group-based anion resin.

7. The method of claim 6, wherein the organic solvent comprises at least one of chloroform, N,N-dimethylacetamide, N,N-dimethylformamide, N-methyl-2-pyrrolidone, or dimethyl sulfoxide.

8. The method of claim 6, wherein the precipitating agent comprises at least one of ethanol, ethyl acetate, ethylene glycol, diethyl ether, tetrahydrofuran, acetone, or water.

9. A sulfonate group-based anion resin, comprising at least one of a segment V, a segment VI, or a segment VII;
wherein the segment V has a structure represented by 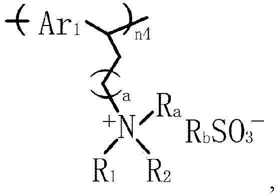
wherein n4 represents a polymerization degree of the segment V; Ar₁ represents an aromatic structural unit; a represents a number of methylene groups, and the a is a positive integer; R₁ and R₂ are each independently selected from H, a hydrocarbon group or a substituted hydrocarbon group, or R₁ and R₂ together with N atom to which they are connected form a polycyclic ring;
the segment VI has a structure represented by 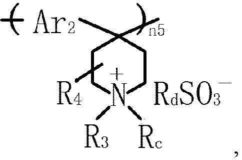
wherein n5 represents a polymerization degree of the segment VI; Ar₂ represents an aromatic structural unit; and R₃ and R₄ are each independently selected from H, a hydrocarbon group or a substituted hydrocarbon group; and
the segment VII has a structure represented by 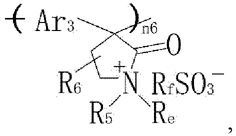
wherein n6 represents a polymerization degree of the segment VII; Ar₃ represents an aromatic structural unit, and R₅ and R₆ are each independently selected from H, a hydrocarbon group or a substituted hydrocarbon group.

10. The sulfonate group-based anion resin of claim 9, wherein Rₐ, R_{c}, and Rₑ are each independently selected from one of an aromatic group, a chain alkyl group having 1 to 10 carbon atoms, or a cycloalkyl group having 3 to 10 carbon atoms, and R_{b}, R_{d}, and R_{f} are each independently selected from one of methyl, ethyl, vinyl, cyclopropyl, trifluoromethyl, phenyl, tolyl, nitrophenyl, or benzyl.

11. The sulfonate group-based anion resin of claim 10, wherein Rₐ, R_{c}, and Rₑ are each independently selected from phenyl, o-tolyl, naphthyl, methyl, ethyl, propyl, butyl, pentyl, hexyl, cyclopropyl, cyclobutyl, cyclopentyl or cyclohexyl.

12. The sulfonate group-based anion resin of claim 9, wherein Ar₁, Ar₂, and Ar₃ are each independently selected from 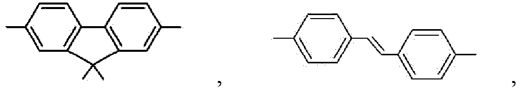 or

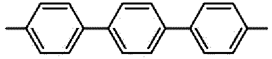

13. The sulfonate group-based anion resin of claim 12, wherein in the segment V, Ari is: 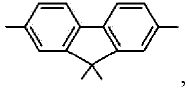 and
wherein the segment V is

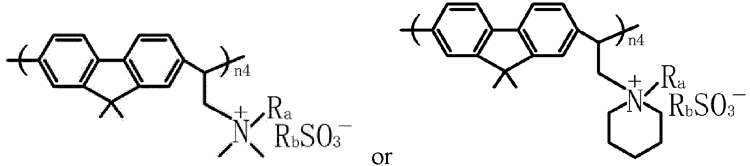

14. The sulfonate group-based anion resin of claim 12, wherein in the segment VI, Ar₂ is:

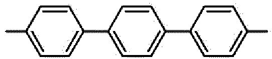

15. The sulfonate group-based anion resin of claim 12, wherein in the segment VII, Ar₃ is:
